# EUROPÄISCHE PATENTANMELDUNG

(11) **EP 3 096 420 A1**
(43) Veröffentlichungstag der Anmeldung: **23.11.2016**
(21) Anmeldenummer: 15168197.0
(22) Anmeldetag: 19.05.2015
(51) Int. Cl.: H01S 3/067, H01S 3/094, H01S 3/16, B23K 26/38

(54) **LASERVORRICHTUNG IN FASERBASIERTER AUSFÜHRUNG, SOWIE LASERBEARBEITUNGSVORRICHTUNG**

(71) Anmelder: Bystronic Laser AG, 3362 Niederönz (CH)
(72) Erfinder: Rataj, Thomas, 3363 Oberoenz (CH)
(74) Vertreter: Patentbüro Paul Rosenich AG

(57) **Zusammenfassung**

Eine Laservorrichtung in faserbasierter Ausführung umfasst zumindest eine Resonator-Faser, in der zwischen zwei Faser-Bragg-Gittern (1,3) zumindest ein Abschnitt einer aktiven Faser (2) angeordnet ist. Diese Gitter begrenzen eine Laserkavität, wobei ein Gitter (1) für die Auskopplung des Laserlichtes und ein zweites, gegenüberliegendes Gitter (3) für eine Reflexion des Laserlichts ausgelegt ist. Zumindest eine Pumplichtquelle ist stoffschlüssig und entgegengesetzt der Austrittsrichtung des Laserlichts mit der Resonator-Faser verbunden. Weiters ist der Pumplichtquelle gegenüberliegend und ausserhalb der Laserkavität eine auf die Wellenlänge des Pumplichts abgestimmte Reflexionsanordnung (4) angeordnet.

## Beschreibung

Die Erfindung betrifft eine Laservorrichtung in faserbasierter Ausführung, nach dem Oberbegriff des Anspruchs 1, sowie eine Laserbearbeitungsvorrichtung, insbesondere Laserschneidmaschine, zur Bearbeitung eines Werkstückes durch einen Laserstrahl, nach dem Oberbegriff des Anspruchs 13.

Im Bereich der Flachbett-Schneidanlagen werden heutzutage vorwiegend Faserlaser eingesetzt. Diese bestehen in der Regel aus vielen (typische Anzahl: 4 bis 14) Faserlaser Modulen die mithilfe eines Singlemode-Kopplers inkohärent auf eine einzelne multimodige Ausgangsfaser gekoppelt werden. Typischerweise haben die einzelnen Module im Vergleich zum gesamten System eine weit höhere Brightness, die aus dem Quotienten aus Leistung P und der Beugungsmasszahl M² abgeleitet wird. Beispielsweise hat ein Faserlaser mit P = 6kW und M² =10 eine Brightness von 0.06, hingegen jedes seiner sechs Module mit P = 1 kW und M² =1 eine Brightness von 1. Diese hohe Brightness bestimmt weitgehend die Auslegung von faserbasierten Laserkavitäten der Module.

Bisher werden monolithische (sog. all in fiber) Laserkavitäten einseitig oder auch beidseitig mit fasergekoppelten Dioden gepumpt. Die erstgenannte Variante ist beispielsweise in Robert G. Waats, Siamak Makki, Jinning Giltner, Brian Engstorm, Rick Tumminelli, Len Marabella, Fiber Laser at JDS Uniphase, Photonics West (2004), beschrieben. Auch WO2009077636 offenbart faserbasierte Anordnungen, bei welchen über einen ausserhalb der Laserkavität angeordneten Pumpkoppler das Licht der faserbasierten Pumplichtquellen gekoppelt wird. Hierbei wird auch eine Anordnung gezeigt, bei der das Laserlicht gegensinnig zum Pumplicht über den Pumpkoppler mit durchgeführten Faserkern für das Laserlicht aus der Laserkavität ausgekoppelt wird.

Beidseitiges Pumpen mit fasergekoppelten Dioden ist beispielsweise in der US7649914, der US8094370 offenbart. Wie in US6434302, WO2005029146, WO2009077636 und DE102008020828 gezeigt, werden dabei Pumpkoppler eingesetzt, die eine Kopplung von jeweiligen Enden der faserbasierten Laserkavität ermöglichen. Die Patente US6826335 und US5999673 zeigen ebenso eine beidseitige Pumpdioden Anordnung, jedoch auf Basis einer seitlichen Pumplicht-Kopplung.

Faserbasierte Laserkavitäten lassen sich alternativ mit Freistrahl-basierten Dioden pumpen. In WO2014146650 und Negel, J. P., Austerschulte, A., Vogel, M. M., Rataj, T., Voss, A., Ahmed, M. A., & Graf, T. (2014). Delivery of 800 W of nearly diffraction-limited laser power through a 100 m long multimode fiber. Laser Physics Letters, 11 (5), 055104, wird beispielsweise einseitig vom Ende her das Dioden-Pumplicht in die Faser der Laserkavität fokussiert.

DE102004027625, EP0923798 und US8537865 offenbaren front-gepumpte Anordnungen auf Basis von Freistrahl-basierten Dioden. Eine bevorzugte Ausführungsform dieser Anordnung hat am Ende ihrer Laserkavität zusätzlich eine Pumplicht-Reflexion, die eine Verkürzung der aktiven Faser und hohe optische Effizienten bis zu 86% erlaubt und gleichzeitig die Schwellen für nichtlinearen Effekte anhebt, wie in Popp, A., Voss, A., Graf, T., Unger, S., Kirchhof, J., & Bartelt, H. (2010, April). Thin-disk-laser-pumped ytterbiumdoped fiber laser with an output power in the kW range. In SPIE Photonics Europe (pp. 772102-772102). International Society for Optics and Photonics, erläutert ist. Diese spezielle Anordnung kann als eine Faltung der Pumplichtführung angesehen werden.

US6347100 und US20150010025 offenbaren hingegen endgepumpte Laserkavitäten mit einer Faltung der Pumplichtführung hinter dem Gitter bzw. auf dem Reflektor für die effektive Auskopplung des Laserlichts. Bragg-Gitter für das multimodige Pumplicht sind jedoch im Multi-kW-Bereich derzeit nicht bekannt, so dass zwangsweise ein dichroitischer Reflektor für die Pumpwellenlänge zum Einsatz kommt. Daraus resultiert eine Unterbrechung der Wellenleitung und damit eine Freistrahlpropagation, so dass der monolithische Ansatz zwischen den einzelnen Modulen und dem Singlemode-Koppler nicht eingehalten werden kann.

Die industrielle Einsatztauglichkeit und die Skalierbarkeit im Multi-kW-Bereich von Freistrahl-gepumpten Faserlasern ist jedoch aufgrund vom hohen Verschmutzungsrisiken, sowie grundlegenden thermisch bedingten Effekten von Freistrahl-Optiken (Fokusverschiebung, Brillanz-Verluste...) nicht ohne weiteres erreichbar. Bei monolithischen Faserlasern hingegen sind diese Probleme in der Form nicht gegeben, so dass die Skalierbarkeit im industriellen Einsatz relativ einfach ist. Wegen der vorherrschenden höchsten Brightness nehmen insbesondere nichtlineare Effekte sowie thermische Aspekte einen maßgeblichen Einfluss auf die Auslegung von faserbasierten Laserkavitäten. Diese limitierenden Effekte können vorzugsweise über die Faser-Geometrie, die hauptsächlich durch die Faserlänge sowie die Durchmesser des Faserkerns und Fasermantels bestimmt wird, beeinflusst werden. Eine weitere Möglichkeit beinhaltet die Ausnutzung der wellenlängenabhängigen Pumplichtabsorption in Ytterbium dotierten Fasern sowie die Änderungen der Konzentration von aktiven Ionen im Faserkern. Alternativ kann, wie in der US20130034326 beschrieben ist, eine Reduzierung der Intensität durch Umformung der Grundmode im Bereich des aktiven Faserkerns erreicht werden. Weitere Möglichkeiten sind gegeben: mit der Erhöhung der effektiven Querschnittsfläche der Faserkerne in passiven und/oder aktiven Faserlaser-Abschnitten, mit der Erhöhung des effektiven Intensitätsüberlaps zwischen Pump- und Laser-Strahlung, oder durch den Einsatz von lang periodischen Gittern oder speziellen Faser-Bragg-Gittern (z.B. LPG, SFBG) zur Unterdrückung der simulierten Raman Streuung (SRS), wie in US7912099 offenbart.

Aufgabe der vorliegenden Erfindung ist es somit, eine skalierbare monolithische Anordnung einer Laserkavität im multi-kW-Bereich bei möglichst hoher Effizienz zu erzielen.

Die Aufgabe wird durch die Merkmale des unabhängigen Anspruchs gelöst. Vorteilhafte Weiterbildungen sind in den Figuren und in den abhängigen Patentansprüchen dargelegt.

Eine Laservorrichtung, auf welche die gegenständliche Erfindung Anwendung findet, umfasst zumindest eine Resonator-Faser, in der zwischen zwei Faser-Bragg-Gittern zumindest ein Abschnitt einer aktiven Faser angeordnet ist, wobei die Faser-Bragg-Gitter eine Laserkavität begrenzen, wobei ein erstes Gitter für die effektive Auskopplung des Laserlichtes und wobei ein zweites Gitter am gegenüberliegenden Ende der aktiven Faser für eine effiziente Reflexion des Laserlichts ausgelegt ist. Weiters ist zumindest eine Pumplichtquelle stoffschlüssig und entgegengesetzt der Austrittsrichtung des Laserlichts mit der Resonator-Faser verbunden.

Gemäss der Erfindung ist der Pumplichtquelle gegenüberliegend und ausserhalb des der Laserkavität begrenzenden Faser-Bragg-Gitters für eine effiziente Reflexion des Laserlichts eine auf die Wellenlänge des Pumplichts abgestimmte Reflexionsanordnung angeordnet. Die erfindungsgemässe Vorrichtung vereinigt durch eine zur Laseraustritts-Richtung gegenläufige Pumplicht-Kopplung mit Signallicht-Durchführung und zugleich einer Pumplicht-Reflexion nach dem hoch reflektierenden Bragg Gitter die Vorteile der monolithischen und der front-gepumpten freistrahlbasierten Anordnungen. Erfindungsgemäss wird eine Faltung der Pumplichtführung eingebracht, die eine Verkürzung der aktiven Faser und zugleich eine gleichmässige Besetzungsinversion bewirkt, so dass die Skalierbarkeit und zugleich optische Effizienz massgeblich gesteigert wird. Die erfindungsgemässe Anordnung ermöglicht monolithische (all in fiber) Faserlaser mit einer sehr guten Skalierbarkeit im multi-kW Bereich trotz hoher Kompatibilität zu kommerziell erhältlichen Komponenten. Allein durch geeignete Wahl der Faser-Geometrie können Pumpwellenlängen mit niedrigem Absorptionsgrad (bei 900nm-950nm) als auch Pumpwellenlängen mit hohem Absorptionsgrad (970nm-980nm) eingesetzt werden. Für Pumpwellenlängen mit hohem Absorptionsgrad (970nm-980nm) kann vorzugsweise eine geringerer effektive Intensitätsüberlappung zwischen Pump- und Laser-Strahlung gebildet werden, so dass die Skalierbarkeit im multi-kW Bereich auch im reinen Grundmode-Betrieb, und damit der höchsten Strahlqualität, möglich wird.

Vorzugsweise ist die Pumplichtquelle durch eine Anordnung von der Austrittsrichtung des Laserlichtes entgegengesetzt ausgerichteten, vorzugsweise fasergekoppelten Pumpdioden gebildet.

Bevorzugt sind dabei die Fasern der Pumpdiode(n) radial um eine zentrale Faser mit Laserlicht-führendem Faserkern angeordnet, wie in US6434302, WO2005029146, WO2009077636 und DE102008020828 offenbart.

Eine vorteilhafte Ausführungsform sieht dabei vor, dass zur Kopplung des Pumplichtes eine zumindest einstufige Anordnung von Faserkopplern vorgesehen ist, wobei zumindest eine Faser der Pumpdiode(n) und die zentrale Faser mit dem Laserlicht-führenden Faserkern auf die Resonator-Faser gekoppelt ist.

Eine weitere Ausführungsform der Erfindung ist dadurch gekennzeichnet, dass zur Kopplung des Pumplichtes eine zumindest zweistufige Anordnung von Faserkopplern vorgesehen ist, wobei in einer erste Stufe zumindest zwei Fasern der Pumpdioden auf eine gemeinsame Pumpfaser der zweiten Stufe gekoppelt sind.

Bei dieser Ausführungsform sind bevorzugt zur Kopplung des Pumplichts in zumindest einer Stufe Faserkoppler in einer (6+1)x1- oder 7x1-Ausführung angeordnet.

Vorzugsweise wird die Querschnittsfläche des durchgeführten Faserkerns für das Laserlicht im Kopplungsbereich des Pumplichts zumindest konstant gehalten.

Die Zentralwellenlänge der Pumpdiode(n) liegt bevorzugt zwischen 900nm und 999nm (sog. 9xx nm - Dioden). Als besonders vorteilhaft haben sich dabei Zentralwellenlängen um 920nm (aufgrund niedrigerer thermischer Belastung) bzw. um 975nm (aufgrund des rein grundmodigen Betriebs) herausgestellt. Durch die gegenüber Pumpwellenlängen um 920nm höhere Absorption beispielsweise bei 975nm wird die thermische Last der aktiven Faser wesentlich höher, aber anderseits die benötigte Faserlänge deutlich reduziert. Gleichzeitig kann der Durchmesser des Faserkerns reduziert werden, so dass eine bessere Erhaltung der höchsten Strahlqualität ermöglicht wird.

Vorzugsweise weist die aktive Faser eine Ytterbium-Dotierung und vorzugsweise eine Co-Dotierung auf und ist vorzugsweise Double-Clad Faser ausgeführt.

Besonders vorteilhaft ist eine Ausführungsform, bei welcher die aktive Faser für einen Single-Mode-Betrieb ausgelegt ist. Jedoch wäre auch ein Laserbetrieb auf einer bzw. gleichzeitig mehreren transversalen Moden mit einer LMA (Large Mode Area) - Faser denkbar.

Weiters kann erfindungsgemäss vorgesehen sein, dass die Reflexionsanordnung für das Pumplicht einen vorzugsweise dichroitischen Spiegel aufweist, der für eine effiziente Reflexion der Pumpwellenlänge optimiert ist, und vorzugsweise mechanisch an das Ende der Resonator-Faser kontaktiert ist.

Bevorzugt ist dabei eine Ausführungsform, bei welcher zwischen dem Ende der Resonator-Faser und dem Spiegel eine abbildende Optik angeordnet ist.

Die eingangs definierte Aufgabe soll auch für eine Laserbearbeitungsvorrichtung gelöst werden, insbesondere für Laserschneidmaschine, zur Bearbeitung eines Werkstückes durch einen Laserstrahl. Eine derartige Vorrichtung umfasst typischerweise aber nicht einschränkend zumindest einen vorzugsweise bewegbaren Laserbearbeitungskopf, zumindest eine Laserquelle und zumindest eine Anordnung zur Zuführung des Laserlichtes von der Laserquelle zum Laserbearbeitungskopf.

Erfindungsgemäss ist diese Vorrichtung gekennzeichnet dadurch eine Laservorrichtung nach einem der obigen Absätze.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine schematische Darstellung einer erfindungsgemässen faserbasierten Laservorrichtung,
- Fig. 2: schematische Darstellungen zweier Ausführungsformen eines einstufigen Pump-Kopplers im Längsschnitt, und
- Fig. 3: schematische Darstellungen zweier Ausführungsformen eines zweistufigen Pump-Kopplers im Längsschnitt.

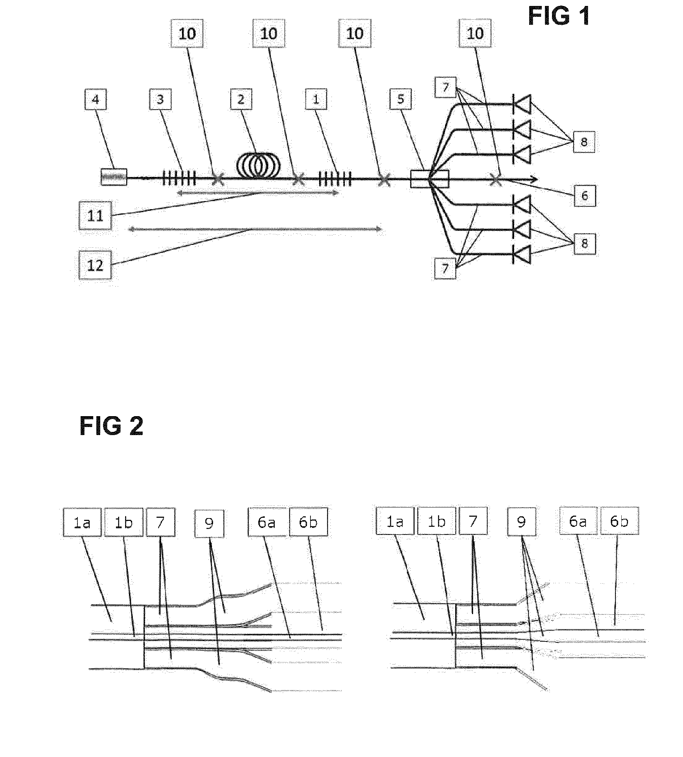

Fig. 1 zeigt eine faserbasierte Laserkavität in einer erfindungsgemässen Ausführungsform in schematischer Darstellung. Ausgangsseitig ist die Laserkavität 11 durch ein teilreflektierendes Faser-Bragg-Gitter 1 begrenzt, das typischerweise von 1% bis zu 20% des Laserlichts reflektiert. Das Gitter 1 ist vorzugsweise in eine passive Faser mit einer typischen Länge zwischen 0.5m und 4m geschrieben, könnte aber auch direkt in die aktive Faser 2 geschrieben sein. Die aktive Faser 2 weist meist zumindest eine Ytterbium-Dotierung auf und hat eine Länge zwischen 7m und 30m. Vorzugsweise ist auch eine Co-Dotierung der aktiven Faser 2 vorgesehen, die typischerweise als Double-Clad Faser ausgeführt ist. Die aktive Faser führt ausschließlich die Grundmode oder auch gleichzeitig mehreren transversalen Moden.

Der Faserdurchmesser der Laserkavität ist vorzugsweise über die gesamte Länge konstant und beträgt 9um bis 30um, wobei der Durchmesser abhängig von der Laserleistung variiert werden kann. Damit kann für jede Leistungsklasse eine optimale Stahlqualität gewährleistet werden. Im Nah-Infraroten-Bereich (NIR-Bereich) wird folglich eine Mode (Grundmode) bzw. werden gleichzeig mehrere transversale Laserkavität-Moden (Few-Mode) im FL-Laserkavität angeregt.

Ein hochreflektierendes Faser-Bragg-Gitter 3 begrenzt die Laser-Kavität auf der gegenüberliegenden Seite und reflektiert mindestens 95% des Laserlichts. Auch dieses Gitter 3 ist vorzugsweise in ein passive Faser mit einer typischen Länge von 0.5m bis 4m eingeschrieben, könnte allenfalls auch in der aktiven Faser 2 vorhanden sein. Die passiven Fasern 1, 3 werden vorzugsweise möglichst kurz ausgeführt und an die aktive Faser stoffschlüssig gefügt.

Auf der der aktiven Faser 2 gegenüberliegenden Seite des hochreflektierenden Gitters 3, d.h. ausserhalb der eigentlichen Laserkavität, befindet sich eine auf die Pumpwellenlänge abgestimmte Reflexionsanordnung, typischerweise ein hochreflektierender dichroitischer Spiegel 4. Damit entsteht eine Faltung der Pumplichtführung, die eine Halbierung der ansonsten erforderlichen Laserkavität-Länge erlaubt. Eine kurze Laserkavität-Länge ist vorteilhalft für Leistungsskalierung, Effizienzsteigerung, sowie Dimensionierung des FL-Moduls. Die Reflexion des Pumplichts am Laserkavität-Ende erfolgt vorzugsweise durch eine direkte Kontaktierung des dichroitischen Spiegels 4 (sog. butt-coupling). Wahlweise kann auch eine abbildende Optik zwischen dem (aktiven oder passiven) Faserende und dem dichroitischen Spiegel 4 angeordnet sein.

Eine mögliche alternative Ausführungsform könnte statt eines Bragg-Gitters für die Laserkavität 11 den Spiegel 4 auch zur Reflexion des Pumplichts nutzen. Aufgrund der im Vergleich zum Pumplicht wesentlich höheren Intensität des Laserlichts muss dabei der Spiegel auf diese höhere Intensität abgestimmt sein, um eine lange Lebensdauer des Spiegels 4 zu gewährleisten.

Zur Einkopplung des Pumplichtes in die Laserkavität ist auf der dem Spiegel 4 gegenüberliegenden Seite der Laserkavität, ausserhalb des Gitters 1, zumindest eine Pumplichtquelle stoffschlüssig und entgegengesetzt der Austrittsrichtung des Laserlichts, auch Signallicht bezeichnet, mit der Resonator-Faser 12 verbunden, welche sich aus der aktiven Faser 2 als den allfälligen passiven Fasern 1, 3 zusammensetzt. Die Verbindung erfolgt über einen Pumpkoppler 5, in welchem die Pumpfasern 7 zusammenlaufen, die vorzugsweise von fasergekoppelten Pumpdioden 8 ausgehen. Vorzugsweise verläuft auch eine das nutzbare Laserlicht führende passive Faser 6 durch den Pumpkoppler 5 hindurch.

Die stoffschlüssigen Verbindungen zwischen den Fasern untereinander sowie mit dem Pumpkoppler 5 sind mit 10 bezeichnet.

Eine schematische Anordnung eines Pumpkopplers 5 mit sieben dicht nebeneinander angeordneten Fasern ist in Fig. 2 im Längsschnitt dargestellt, wobei auf der linken Seite eine Ausführungsform mit konstanter Signallichtfaser 6 und rechts eine Ausführungsform mit verjüngter Signallichtfaser 6 zu sehen ist. Im Koppler 5 sind die Fasern 7 der Pumpdioden 8 vorzugsweise radial um eine zentrale Faser 6 angeordnet. Diese zentrale Faser 6 weist einen Mantel 6a entsprechend dem Pumplicht-Mantel (cladding) sowie einen Faserkern (core) 6b auf. In jedem Fall sind für die Pumplichtfasern 7 Bereiche 9 vorgesehen, in welchen sich diese verjüngen, um die Querschnitte in Übereinstimmung zu bringen.

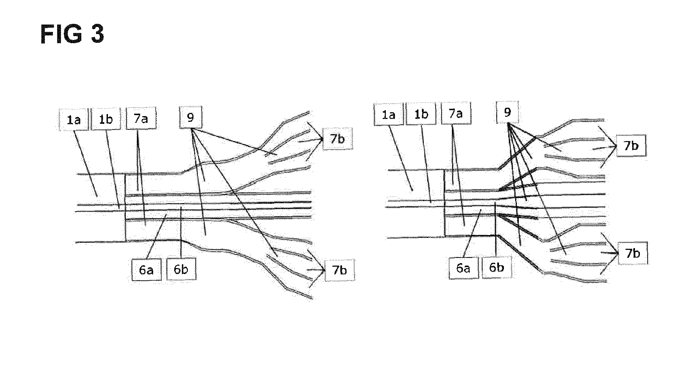

Neben der in den Fig. 1 und 2 dargestellten einstufigen Anordnung, bei welcher zumindest eine Faser 7 der Pumpdiode(n) 8 und die zentrale Faser 6 mit dem Laserlicht-führenden Faserkern 6b auf die Resonator-Faser 2 gekoppelt ist, kann allenfalls auch eine zumindest zweistufige Anordnung von Faserkopplern 5 vorgesehen sein, wie dies in Fig. 3 dargestellt ist. Wieder ist auf der linken Seite eine Ausführungsform mit konstanter Signallichtfaser 6 und rechts eine Ausführungsform mit verjüngter Signallichtfaser 6 dargestellt.

Dabei sind in einer erste Stufe zumindest zwei Fasern 7b der Pumpdioden 8 auf jeweils eine gemeinsame Pumpfaser 7a der zweiten Stufe gekoppelt.
Diese Pumpfasern 7a der zweiten Stufe laufen im Pumpkoppler 5 zusammen und werden dort auf die aktive Faser 2 gekoppelt, wie oben bereits erläutert wurde. Vorteilhafterweise kommen zur Kopplung des Pumplichts in zumindest einer Stufe Faserkoppler 5 in einer (6+1)x1- oder 7x1-Ausführung zum Einsatz.

Wie auch bei der Kopplung der Fasern werden die Pumpdioden 8 an deren Pumpfasern 7 bzw. die unterschiedlichen Stufen von Pumpkopplern 5 vorzugsweise stoffschlüssig verbunden und fügen sich somit in den monolithischen Aufbau des Faserlaser-Moduls ein.

Die Zentralwellenlänge der eingesetzten Pumpdiode(n) liegt vorzugsweise zwischen 900nm und 999nm (sog. 9xx nm - Dioden). Der bevorzugte Bereich liegt um 920nm oder um 975nm.

Aufgrund der guten Skalierbarkeit bei hoher Laserausgangsleistung sind Laserbearbeitungsvorrichtungen, insbesondere Laserschneidmaschinen, zur Bearbeitung eines Werkstückes durch einen Laserstrahl, besonders bevorzugte Einsatzgebiete des erfindungsgemässen Faserlaser-Moduls. Derartige Vorrichtungen umfassen einen vorzugsweise bewegbaren Laserbearbeitungskopf, zumindest eine Laserquelle in Form des erfindungsgemässen Moduls und zumindest eine Anordnung zur Zuführung des Laserlichtes von der Laserquelle zum Laserbearbeitungskopf.

### Bezugszeichenliste

- 1: Faserbasiertes Bragg-Gitter (FGB) für Laserlicht Auskopplung
- 1a: Pumplicht-Mantel (cladding)
- 1b: Faserkern (core)
- 2: Aktiv dotierte Faser
- 3: Faserbasiertes Bragg-Gitter (FBG)
- 4: Kontaktierter HR-Spiegel
- 5: Pump-Koppler
- 6: Laserlichtführende passive Faser
- 6a: Mantel (cladding) der laserlichtführenden Faser
- 6b: Faserkern (core) der laserlichtführenden Faser
- 7: Pumpfasern des Ports
- 7a: Pumpfasern des ersten Pumplicht-Kopplers
- 7b: Pumpfasern eines weiteren in Reihe geschalteten Pumplicht-Kopplers
- 8: Fasergekoppelte Pumpdiode
- 9: Bereiche der Faser-Verjüngung (tapering regions)
- 10: Spleiss-Stellen
- 11: faserbasierte Laserkavität
- 12: Resonator-Faser

## Patentansprüche

1. Laservorrichtung in faserbasierter Ausführung, umfassend zumindest eine Resonator-Faser, in der zwischen zwei Faser-Bragg-Gittern zumindest ein Abschnitt einer aktiven Faser angeordnet ist, wobei die Faser-Bragg-Gitter eine Laserkavität begrenzen, wobei ein erstes Gitter für die effektive Auskopplung des Laserlichtes und wobei ein zweites Gitter am gegenüberliegenden Ende der aktiven Faser für eine effiziente Reflexion des Laserlichts ausgelegt ist, wobei zumindest eine Pumplichtquelle stoffschlüssig und entgegengesetzt der Austrittsrichtung des Laserlichts mit der Resonator-Faser verbunden ist, **und dass** der Pumplichtquelle gegenüberliegend und ausserhalb des die Laserkavität begrenzenden Faser-Bragg-Gitters eine auf die Wellenlänge des Pumplichts abgestimmte Reflexionsanordnung angeordnet ist.

2. Laservorrichtung nach Anspruch 1, **dadurch gekennzeichnet, dass** die Pumplichtquelle durch eine Anordnung von der Austrittsrichtung des Laserlichtes entgegengesetzt ausgerichteten, vorzugsweise fasergekoppelten Pumpdioden gebildet ist.

3. Laservorrichtung nach Anspruch 2, **dadurch gekennzeichnet, dass** die Fasern der Pumpdiode(n) radial um eine zentrale Faser mit Laserlicht-führendem Faserkern angeordnet sind.

4. Laservorrichtung nach Anspruch 3, **dadurch gekennzeichnet, dass** zur Kopplung des Pumplichtes eine zumindest einstufige Anordnung von Faserkopplern vorgesehen ist, wobei zumindest eine Faser der Pumpdiode(n) und die zentrale Faser mit dem Laserlicht-führenden Faserkern auf die Resonator-Faser gekoppelt ist.

5. Laservorrichtung nach Anspruch 4, **dadurch gekennzeichnet, dass** zur Kopplung des Pumplichtes eine zumindest zweistufige Anordnung von Faserkopplern vorgesehen ist, wobei in einer erste Stufe zumindest zwei Fasern der Pumpdioden auf eine gemeinsame Pumpfaser der zweiten Stufe gekoppelt sind

6. Laservorrichtung nach Anspruch 5, **dadurch gekennzeichnet, dass** zur Kopplung des Pumplichts in zumindest einer Stufe Faserkoppler in einer (6+1)x1- oder 7x1-Ausführung angeordnet sind.

7. Laservorrichtung nach einem der Ansprüche 4 bis 6, **dadurch gekennzeichnet, dass** die Querschnittsfläche des durchgeführten Faserkerns für das Laserlicht im Kopplungsbereich des Pumplichts zumindest konstant gehalten wird.

8. Laservorrichtung nach einem der Ansprüche 2 bis 7, **dadurch gekennzeichnet, dass** die Zentralwellenlänge der Pumpdiode(n) zwischen 900nm und 999nm (sog. 9xx nm - Dioden) und vorzugsweise um 920nm und/oder um 975nm liegt.

9. Laservorrichtung nach einem der Ansprüche 1 bis 8, **dadurch gekennzeichnet, dass** die aktive Faser eine Ytterbium-Dotierung und vorzugsweise eine Co-Dotierung aufweist und vorzugsweise Double-Clad Faser ausgeführt ist.

10. Laservorrichtung nach einem der Ansprüche 1 bis 9, **dadurch gekennzeichnet, dass** die aktive Faser für einen Single-Mode-Betrieb oder einen Betrieb gleichzeitig mit mehreren transversalen Modi mit einer LMA (large mode area) ausgelegt ist.

11. Laservorrichtung nach einem der Ansprüche 1 bis 10, **dadurch gekennzeichnet, dass** die Reflexionsanordnung für das Pumplicht einen vorzugsweise dichroitischen Spiegel aufweist, der für eine effiziente Reflexion der Pumpwellenlänge optimiert ist, und vorzugsweise mechanisch an das Ende der Resonator-Faser kontaktiert ist.

12. Laservorrichtung nach Anspruch 11, **dadurch gekennzeichnet, dass** zwischen dem Ende der Resonator-Faser und dem Spiegel eine abbildende Optik angeordnet ist.

13. Laserbearbeitungsvorrichtung, insbesondere Laserschneidmaschine, zur Bearbeitung eines Werkstückes durch einen Laserstrahl, umfassend einen vorzugsweise bewegbaren Laserbearbeitungskopf, zumindest eine Laserquelle und zumindest einer Anordnung zur Zuführung des Laserlichtes von der Laserquelle zum Laserbearbeitungskopf, **dadurch gekennzeichnet, dass** die Laserquelle eine Laservorrichtung nach einem der Ansprüche 1 bis 12 enthält.
